**Europäisches Patentamt**

**European Patent Office**

**Office européen des brevets**

(19)

(11) Veröffentlichungsnummer : **0 257 412 B2**

(12) # NEUE EUROPÄISCHE PATENTSCHRIFT

(45) Veröffentlichungstag der neuen Patentschrift :
07.07.93 Patentblatt 93/27

(51) Int. Cl.$^5$ : **D21H 21/16**

(21) Anmeldenummer : **87111490.6**

(22) Anmeldetag : **08.08.87**

---

(54) **Leimungsmittel für Papier auf Basis feinteiliger wässriger Dispersionen.**

---

Die Akte enthält technische Angaben, die nach dem Eingang der Anmeldung eingereicht wurden und die nicht in dieser Patentschrift enthalten sind.

(30) Priorität : **14.08.86 DE 3627594**

(43) Veröffentlichungstag der Anmeldung :
**02.03.88 Patentblatt 88/09**

(45) Bekanntmachung des Hinweises auf die Patenterteilung :
**07.11.90 Patentblatt 90/45**

(45) Bekanntmachung des Hinweises auf die Entscheidung über den Einspruch :
**07.07.93 Patentblatt 93/27**

(84) Benannte Vertragsstaaten :
**AT BE CH DE ES FR GB IT LI NL SE**

(56) Entgegenhaltungen :
**EP-A- 0 058 313**

(56) Entgegenhaltungen :
**EP-A- 0 134 449
EP-A- 0 150 003
DE-A- 2 163 850
DE-A- 3 116 797
DE-B- 2 234 908
US-A- 3 061 471
US-A- 3 061 472
US-A- 3 785 921**

(73) Patentinhaber : **BASF Aktiengesellschaft
Carl-Bosch-Strasse 38
W-6700 Ludwigshafen (DE)**

(72) Erfinder : **Degen, Hans-Juergen, Dr.
Schillerstrasse 6
W-6143 Lorsch (DE)**
Erfinder : **Reichel, Fritz, Dr.
Holunderweg 3
W-6945 Hirschberg (DE)**
Erfinder : **Riebeling, Ulrich
Goerlitzer Strasse 39
W-6707 Schifferstadt (DE)**
Erfinder : **Hoehr, Lothar, Dr.
Giselherstrasse 14
W-6520 Worms 1 (DE)**

## Beschreibung

Aus der US-PS 3 061 471 ist bekannt, Acrylsäureester, die sich von Alkoholen mit 2 bis 4 Kohlenstoffatomen ableiten, in Gegenwart von Radikale bildenden Polymerisationsinitiatoren in einer wäßrigen Lösung von Stärke zu polymerisieren. Man erhält stabile wäßrige Dispersionen, die als Schlichtemittel verwendet werden. Gemäß der US-PS 3 061 472 erfolgt die Polymerisation von Acrylsäureestern, die sich von Alkoholen mit 2 bis 4 Kohlenstoffatomen ableiten, in wäßrigen Lösungen von Stärke noch zusätzlich in Gegenwart eines nichtionischen oberflächenaktiven Mittels. Auch die so erhaltenen wäßrigen Dispersionen werden als Schlichtemittel verwendet.

Aus der DE-OS 31 16 797 ist eine stabile wäßrige Polymerdispersion bekannt, die durch Copolymerisieren von mindestens einem Vinylmonomer in einer wäßrigen Lösung einer derivatisierten und verdünnten Stärke erhalten wird. Die dabei eingesetzte Stärke hat einen Substitutionsgrad von wenigstens 0,05 und eine Intrinsic-Viskosität von nicht weniger als 0,12 dl/g. Die so erhaltenen Polymerdispersionen werden als Schlichtemittel und Beschichtungsmittel verwendet. Nach dem aus der EP-Anmeldung 134 449 bekannten Verfahren werden wäßrige Polymerdispersionen durch Polymerisation ethylenisch ungesättigter Verbindungen in wäßrigem Medium in Gegenwart von mindestens 0,6 Gew.%, bezogen auf das Gesamtgewicht der Monomeren, einer wasserlöslichen Stärke bzw. einer abgebauten Stärke unter Verwendung von mindestens 30 mmol, je kg der Monomeren, Wasserstoffperoxid, Ketonperoxiden und/oder organischen Hydroperoxiden sowie Redoxkatalysatoren bei Temperaturen von 10 bis 100°C polymerisiert. Die so erhältlichen Polymerdispersionen werden zur Herstellung von Klebstoffen, als Farb-, Textil- oder Papierhilfsmittel oder in hydraulisch abbindenden Massen verwendet. Die Dispersionen besitzen jedoch nur eine schlechte Leimungswirkung für Papier.

Aus der JP-OS 58/115 196 ist ein Papierhilfsmittel bekannt, das die Festigkeit von Papier erhöht und gleichzeitig das Papier leimt. Das Papierhilfsmittel beruht auf einer Dispersion eines Pfropfcopolymerisates von Styrol mit Alkylacrylaten auf Stärke. Die Pfropfcopolymerisate werden erhalten, indem man Styrol und einen Acrylester, z.B. n-Butylacrylat, in wäßrigem Medium bei Temperaturen von 20 bis 100°C unter Bildung einer wäßrigen Dispersion polymerisiert. Die mit Hilfe dieser Dispersionen erzielbaren Leimungseffekte auf Papier sind noch verbesserungsbedürftig.

Aus der DE-A 2 163 850 ist ein Verfahren zur Oberflächenleimung von Papier und Karton bekannt, bei dem man eine wäßrige Dispersion eines filmbildenden Copolymerisats, das 15 bis 60 Gew.-% eines Nitrils einer $\alpha,\beta$-olefinisch ungesättigten Carbonsäure und andere olefinisch ungesättigte Monomere einpolymerisiert enthält, auf die Oberfläche von Papier aufträgt und das Papier trocknet. Gemäß Beispiel 1 wird eine Copolymerisatdispersion aus 67 Gew.-Teilen n-Butylacrylat, 30 Gew.-Teilen Acrylnitril und 3 Gew.-Teilen Methacrylsäure als Oberflächenleimungsmittel verwendet. Die Präparationslösung enthält die Dispersion in einer Menge von 18 g/l und zusätzlich noch Stärke in einer Menge von 60 g/l. Um eine ausreichende Leimung zu erhalten, benötigt man hohe Aufwandmengen an Polymerdispersion und Stärke.

Aus der EP-A 0150 003 sind kationische Leimungsmittel für Papier bekannt, die in Form einer wäßrigen kolloiddispersen Lösung mit einem mittleren Teilchendurchmesser von 15 bis 200 nm vorliegen. Diese Leimungsmittel werden dadurch hergestellt, daß man in einer wäßrigen Lösung eines kationischen, chemisch einheitlich aufgebauten Terpolymerisats als Emulgator 0 bis 90 Gew.-% Acrylnitril- und/oder Methacrylnitril, 5 bis 95 Gew.-% Styrol und 5 bis 95 Gew.-% Acrylsäure- und/oder Methacrylsäureester copolymerisiert.

Der Erfindung liegt die Aufgabe zugrunde, gegenüber dem Stand der Technik ein verbessertes Leimungsmittel für Papier auf Basis feinteiliger wäßriger Dispersionen von Copolymerisaten zur Verfügung zu stellen, die durch Copolymerisieren von ethylenisch ungesättigten Monomeren nach Art einer Emulsionspolymerisation in Gegenwart von Stärke erhältlich sind.

Die Aufgabe wird erfindungsgemäß dadurch gelöst, daß man 10 bis 56 Gewichtsteile einer Monomermischung aus

(a) 20 bis 65 Gew.% Acrylnitril und/oder Methacrylnitril,
(b) 80 bis 35 Gew.% eines Acrylsäureesters eines einwertigen, gesättigten $C_3$- bis $C_8$-Alkohols und
(c) 0 bis 10 Gew.% anderen ethylenisch ungesättigten copolymerisierbaren Monomeren,

wobei die Summe der Gewichtsprozente (a), (b) und (c) immer 100 beträgt, in 100 Gewichtsteilen einer wäßrigen Lösung, die 1,5 bis 25 Gew.% einer abgebauten Stärke mit einer Viskosität $\eta_i$ = 0,12 bis 0,50 dl/g gelöst enthält, bei Temperaturen von 40 bis 100°C in Gegenwart von Wasserstoffperoxid, Kombinationen von Wasserstoffperoxid mit einem Schwermetallsalz, Redoxsystemen aus Wasserstoffperoxid mit einem Reduktionsmittel oder Redoxsystemen aus Wasserstoffperoxid, einem Reduktionsmittel und zusätzlich einer geringen Menge eines Schwermetallsalzes als Initiator copolymerisiert.

Zur Herstellung der Leimungsmitteldispersionen verwendet man als Monomere der Gruppe (a) Acrylnitril oder Methacrylnitril oder auch Mischungen aus Acrylnitril und Methacrylnitril. Bezogen auf die Summe der gesamten, bei der Polymerisation eingesetzten Monomeren werden die Monomeren der Gruppe (a) zu 20 bis 65, vorzugsweise 25 bis 62 Gew.% verwendet.

Als Monomere der Gruppe (b) kommen Acrylsäureester in Betracht, die sich von einwertigen, gesättigten $C_3$- bis $C_8$-Alkoholen ableiten. Geeignete Ester dieser Art sind beispielsweise n-Propylacrylat, Isopropylacrylat, n-Butylacrylat, Isobutylacrylat, tert.-Butylacrylat, Neopentylacrylat, n-Hexylacrylat, Cyclohexylacrylat und 2-Ethylhexylacrylat. Vorzugsweise verwendet man aus der Gruppe (b) die Butylester der Acrylsäure und hiervon insbesondere n-Butylacrylat und Isobutylacrylat oder Mischungen aus n-Butylacrylat und Isobutylacrylat sowie Mischungen aus n-Butylacrylat und tert.-Butylacrylat und Mischungen aus Isobutylacrylat und tert.-Butylacrylat in jedem beliebigen Verhältnis. Die Monomeren der Gruppe (b) werden, bezogen auf die Summe der bei der Copolymerisation eingesetzten Monomeren, zu 35 bis 80, vorzugsweise 38 bis 75 Gew.% eingesetzt. Die Copolymerisation kann außerdem in Gegenwart von Monomeren der Gruppe (c) vorgenommen werden, die gegebenenfalls zur Modifizierung der Copolymerisate aus (a) und (b) verwendet werden. Als Monomere der Gruppe (c) werden 0 bis 10 Gew.% andere ethylenisch ungesättigte copolymerisierbare Monomere eingesetzt, die nicht unter die Definition der Monomeren gemäß (a) und (b) fallen. Die Summe der Gewichtsprozente von (a), (b) und (c) beträgt immer 100. Als Monomere der Gruppe (c) können beispielsweise ethylenisch ungesättigte $C_3$- bis $C_5$-Carbonsäuren, wie Acrylsäure, Methacrylsäure, Maleinsäure, Fumarsäure, Itaconsäure und Maleinsäurehalbester eingesetzt werden. Zu dieser Gruppe von Monomeren gehören auch Vinylsulfonat und 2-Acrylamidopropansulfonsäure bzw. deren Alkalisalze. Die ethylenisch ungesättigten Carbonsäuren können vollständig mit Natronlauge, Kalilauge, Ammoniak und/oder Aminen neutralisiert sein oder auch nur partiell, z.B. zu 10 bis 80 %.

Eine weitere Modifizierungsmöglichkeit der Copolymerisate aus den Monomeren (a) und (b) ergibt sich dadurch, daß man als Monomere (c) basische Verbindungen einpolymerisiert, z.B. Di-$C_1$- bis $C_3$-Alkylamino-$C_2$-bis $C_6$-Alkylacrylate sowie die entsprechenden Methacrylate, N-Vinylimidazolin und/oder N-Vinyl-2-methyl-imidazolin. Von den basischen Acrylaten verwendet man vorzugsweise Dimethylaminoethylmethacrylat, Dimethylaminoethylacrylat und Diethylaminoethylacrylat. Die basischen Acrylate werden bei der Copolymerisation in Form der Salze mit anorganischen Säuren, wie Salzsäure oder Schwefelsäure, oder der organischen Säuren, z.B. Ameisensäure, Essigsäure und Propionsäure, sowie in quaternisierter Form eingesetzt. Als Quaternisierungsmittel eignen sich vor allem Methylchlorid, Dimethylsulfat, Diethylsulfat, Ethylchlorid und Benzylchlorid. Die Modifizierung der Copolymerisate aus den Komponenten (a) und (b) mit basischen Acrylaten oder N-Vinylimidazolinen bewirkt, daß die in dieser Weise modifizierten feinteiligen Copolymerisat-Dispersionen aus den Monomeren (a) und (b) besser auf die Fasern aufziehen, als nichtmodifizierte Copolymerisat-Dispersionen.

Eine weitere Modifizierungsmöglichkeit ergibt sich dadurch, daß man die Monomeren (a) und (b) in Gegenwart von nichtionischen Monomeren copolymerisiert, wobei zu dieser Gruppe von Monomeren (c) Styrol, Acrylamid, Methacrylamid, Methacrylsäureester, die sich von $C_1$- bis $C_{18}$-Alkoholen ableiten und/oder Acrylsäureester zu verstehen sind, die von den Acrylestern (b) verschieden sind, z.B. Methylacrylat, Ethylacrylat, Decylacrylat, Palmitylacrylat und/oder Stearylacrylat. Von den nichtionischen Monomeren der Gruppe (c) haben insbesondere Styrol, Acrylamid und Methacrylamid besondere Bedeutung. Die Monomeren der (c) können, ebenso wie die Monomeren der anderen Gruppen, allein oder in Mischung untereinander copolymerisiert werden.

Besonders wirksame Leimungsmittel erhält man, wenn man eine Monomermischung aus Acrylnitril und mindestens einem Butylacrylat, vorzugsweise aus 25 bis 62 Gew.% Acrylnitril und 75 bis 38 Gew.% eines Butylacrylats oder einer Mischung von Butylacrylaten, in einer wäßrigen Lösung einer abgebauten Stärke mit einer Viskosität $\eta_i$ = 0,12 bis 0,50 dl/g in Gegenwart von Wasserstoffperoxid, Kombinationen von Wasserstoffperoxid mit einem Schwermetallsalz, Redoxsystemen aus Wasserstoffperoxid mit einem Reduktionsmittel oder Redoxsystemen aus Wasserstoffperoxid, einem Reduktionsmittel und zusätzlich einer geringen Menge eines Schwermetallsalzes als Initiator copolymerisiert.

Die Copolymerisation der Monomeren (a) bis (c) erfolgt nach Art einer Emulsionspolymerisation in wäßrigem Medium in Gegenwart von abgebauten Stärken mit einer Viskosität $\eta_i$ von 0,12 bis 0,50 dl/g. Stärken, die diese Viskosität haben, sind entweder bereits einem oxidativen, thermischen, acidolytischen oder einem enzymatischen Abbau unterworfen worden. Für diesen Abbau können native Stärken, wie Kartoffel-, Weizen-, Reis-, Tapioka- und Maisstärke, eingesetzt werden. Außerdem können chemisch modifizierte Stärken, wie Hydroxyethyl-, Hydroxypropyl- oder quaternisierte Aminoalkylgruppen enthaltende Stärken auf eine Viskosität $\eta_i$ von 0,12 bis 0,50 dl/g abgebaut werden. Vorzugsweise verwendet man oxidativ abgebaute Kartoffelstärke, kationisierte, abgebaute Kartoffelstärke oder Hydroxyethylstärke, insbesondere solche mit einer Viskosität $\eta_i$ von 0,12 bis 0,45 dl/g.

Die Viskosität $\eta_i$ - auch "Intrinsic-Viskosität" genannt - von Stärke wird aus der relativen Viskosität $h_{rel}$ gemäß folgender Gleichung

$$\eta_i = (2{,}303 \times \log \eta_{rel})/\text{Konzentration}$$

errechnet. Die Konzentration wird dabei in g/100 ml angegeben. Die relative Viskosität der aufgeschlossenen Stärkelösungen wird mit Hilfe eines Kapillar-Viskosimeters aus der Viskosität der Lösung bei 25°C bestimmt, wobei man die relative Viskosität aus den korrigierten Durchlaufzeiten für Lösungsmittel $t_0$ und Lösung $t_1$ gemäß folgender Gleichung

$$\eta_{rel} = t_1/t_0$$

errechnet. Die Umrechnung auf $\eta_i$ erfolgt nach der oben angegebenen Beziehung aufgrund der Angaben in "Methods in Carbohydrate Chemistry", Volume IV, Starch, Academic Press, New York and London, 1964, Seite 127.

Zur Herstellung der feinteiligen Copolymerisat-Dispersionen bereitet man zunächst eine wäßrige Lösung, die 1,5 bis 25, vorzugsweise 1,7 bis 21 Gew.% einer abgebauten Stärke mit einer Viskosität $\eta_i$ von 0,12 bis 0,50 dl/g gelöst enthält. Abgebaute Stärken mit einer Viskosität in dem Bereich von 0,3 bis 0,5 dl/g werden vorzugsweise dann eingesetzt, wenn man Dispersionen mit einem niedrigen Feststoffgehalt herstellen will. Die abgebauten Stärken mit einer niedrigeren Viskosität, d.h. in dem Bereich von 0,12 bis etwa 0,3 dl/g, werden bevorzugt bei der Herstellung von Dispersionen mit höheren Feststoffgehalten, z.B. 25 bis 40 Gew.%, verwendet. Man kann auch Mischungen aus Stärken einer unterschiedlichen Viskosität $\eta_i$ als Schutzkolloid einsetzen, jedoch muß die Viskosität der Mischung im angegebenen $\eta_i$-Bereich von 0,12 bis 0,50 dl/g liegen, d.h. es können in diesem Fall auch Stärken eingesetzt werden, deren Viskosität außerhalb des Bereichs liegt. Pro 100 Gewichtsteile einer solchen wäßrigen Stärkelösung unterwirft man 10 bis 56 Gewichtsteile einer Monomermischung aus den Komponenten (a) bis (c) der Co polymerisation. Die Monomeren können entweder in Form einer Mischung oder getrennt voneinander in die wäßrige Lösung der abgebauten Stärke einemulgiert werden. Um die Emulsion zu stabilisieren, kann man der wäßrigen Stärkelösung eine geringe Menge eines Emulgators zusetzen. Man kann jedoch auch die Monomeren mit Hilfe eines Emulgators zunächst in Wasser emulgieren und sie dann in Form der Emulsion zur wäßrigen Stärkelösung zugeben. Als Emulgatoren kommen hierfür Produkte mit anionischem oder kationischem Charakter in Betracht. Solche Emulgatoren sind beispielsweise Natriumalkylsulfonat, Natriumlaurylsulfat, Natriumdodecylbenzolsulfonat oder Dimethylalkylbenzylammoniumchlorid. Es ist empfehlenswert, bei anionischen Stärken anionische Emulgatoren, bei kationischen Stärken kationische Emulgatoren einzusetzen. Die Menge an Emulgator, die gegebenenfalls mitverwendet wird, beträgt 0 bis 0,3, vorzugsweise 0,05 bis 0,2 Gew.%, bezogen auf die Summe der eingesetzten Monomeren (a) bis (c). Vorzugsweise wird die Emulsionspolymerisation jedoch in Abwesenheit eines Emulgators durchgeführt, weil Emulgatoren in aller Regel die Leimung verschlechtern und bei der Handhabung der Leimungsmittel bzw. bei der Anwendung der Leimungsmittel oft Anlaß zu einer starken Schaumentwicklung geben.

Die Copolymerisation der Monomeren in der wäßrigen Lösung der abgebauten Stärke wird bei Temperaturen von 40 bis 100, vorzugsweise 50 bis 100°C in Gegenwart Wasserstoffperoxid, Kombinationen von Wasserstoffperoxid mit einem Schwermetallsalz, z.B. Einsen-II-sulfat oder ein Redoxsystem aus Wasserstoffperoxid mit einem geeigneten Reduktionsmittel, wie Natriumformaldehydsulfoxylat, Ascorbinsäure, Natriumdisulfit und/oder Natriumdithionit oder doxsystemen aus Wasserstoffperoxid, einem Reduktions mittel oder einer Mischung der genannten Reduktionsmittel und zusätzlich einer geringen Menge eines Schwermetallsalzes, wie beispielsweise Eisen-II-sulfat als Initiator durchgeführt.

Während der Polymerisation ist für eine gute Durchmischung der Komponenten zu sorgen. So wird das Reaktionsgemisch vorzugsweise während der gesamten Dauer der Polymerisation und einer sich gegebenenfalls daran anschließenden Nachpolymerisation zur Erniedrigung des Restmonomerengehaltes gerührt. Die Polymerisation wird unter Ausschluß von Sauerstoff in einer Inertgasatmosphäre, z.B. unter Stickstoff, durchgeführt. Um die Polymerisation zu starten, entfernt man zunächst den Sauerstoff aus der wäßrigen Lösung der Stärke sowie aus den Monomeren und gibt zunächst 1 bis 40 % der zu polymerisierenden Monomeren zu der wäßrigen Lösung der Stärke und emulgiert durch Rühren der Reaktionsmischung die Monomeren darin. Durch vorhergehende, gleichzeitige oder nachträgliche Zugabe einer wäßrigen Initiatorlösung beginnt - in aller Regel nach einer kurzen Induktionsperiode - die Polymerisation. Dabei kann die zu Beginn der Polymerisation entstehende Polymerisationswärme dazu verwendet werden, um das Reaktionsgemisch zu erwärmen. Die Temperatur kann dabei bis auf 90°C ansteigen. Sobald die vorgelegten Monomeren polymerisiert sind, wird der Rest der Monomeren und der Initiatorlösung kontinuierlich oder portionsweise zugefügt und unter Rühren polymerisiert. Die Copolymerisation kann jedoch auch diskontinuierlich oder kontinuierlich vorgenommen werden. Man erhält eine feinteilige, wäßrige Dispersion, bei der die Copolymerisatteilchen von einer Schutzkolloidhülle auf Basis einer abgebauten Stärke umgeben sind. Ein Maß für die Feinteiligkeit der Dispersion ist der LD-Wert (Lichtdurchlässigkeitswert der Dispersion). Der LD-Wert wird gemessen, indem man die Dispersion in 0,01 gew.%iger wäßriger Lösung in einer Küvette einer Kantenlänge von 2,5 cm mit Licht der Wellenlänge 546 nm vermißt und mit der Durchlässigkeit von Wasser unter den vorstehend genannten Bedingungen vergleicht. Die Durchlässigkeit von Wasser wird dabei mit 100 % angegeben. Je feinteiliger die Dispersion ist, desto höher ist der LD-Wert, der nach der oben beschriebenen Methode gemessen wird.

Die mittlere Teilchengröße der Copolymerisatteilchen ohne die Schutzkolloidhülle aus abgebauter Stärke kann ermittelt werden, wenn man die Stärkehülle der Latexteilchen praktisch vollständig enzymatisch abbaut. Eine mögliche Koagulation der Copolymerisat-Dispersion kann dabei durch Zusatz eines geeigneten Emulgators verhindert werden. Nach dem enzymatischen Abbau kann dann die Teilchengröße der Copolymerisatdispersion mit handelsüblichen Geräten gemessen werden, z.B. mit Hilfe des Nano sizers der Firma Coulter Electronics. Der mittlere Durchmesser der Copolymerisatteilchen ohne die Schutzkolloidhülle beträgt 75 bis 110 nm.

Die oben beschriebenen feinteiligen wäßrigen Dispersionen von Copolymerisaten werden als Masse- und Oberflächenleimungsmittel für Papier verwendet. Bei der Oberflächenleimung von Papier wird die Copolymerisatdispersion durch Zugabe von Wasser auf eine Gesamtpolymerisatkonzentration eingestellt, die für Präparationslösungen zum Leimen von Papier allgemein üblich ist, z.B. auf einen Polymerisatgehalt von 0,05 bis 3,0 Gew.%. Die Menge an Copolymerisat, die auf das Papier für Leimungszwecke aufgebracht wird, liegt in der Regel zwischen 0,02 und 1,5, vorzugsweise zwischen 0,3 und 0,8 Gew.%, bezogen auf trockenen Faserstoff. Zur Herstellung der Präparationslösungen werden die Dispersionen, deren Feststoffgehalt 15 bis 40 Gew.% beträgt, mit Wasser verdünnt. Die Präparationslösungen können außerdem weitere Hilfsstoffe enthalten, z.B. native Stärke zur Erhöhung der Festigkeit des Papiers, Naß- und Trockenverfestigungsmittel auf Basis synthetischer Produkte, Farbstoffe und Wachsemulsionen.

Die Präparationslösungen werden in der Regel mit Hilfe einer Leimpresse auf die Oberfläche des Papiers aufgebracht. Es ist selbstverständlich auch möglich, die Präparationslösung durch Sprühen oder Tauchen oder z.B. mit Hilfe eines Wasserschabers auf die Papierbahnen aufzutragen. Das mit der Präparationslösung behandelte Papier wird anschließend heiß getrocknet. Die Leimung ist nach dem Trocknen der Papierbahn bereits voll ausgebildet.

Die in den Beispielen angegebenen Teile sind Gewichtsteile, die Prozentangaben beziehen sich ebenfalls auf das Gewicht der Stoffe. Der Leimungsgrad der Papiere wurde mit Hilfe des Cobb-Wertes nach DIN 53 132 bestimmt. Für die Prüfung der Leimungswirkung der Copolymerisatdispersionen wurden zwei verschiedene Prüfpapiere verwendet. Sie hatten folgende Stoffzusammensetzung:

Prüfpapier A 50 % gebleichter Sulfitzellstoff
50 % gebleichter Sulfatzellstoff
30 % Kreide, bezogen auf trockenen Zellstoff.
Herstellung des Papiers erfolgte bei pH 7.
Prüfpapier B 50 % gebleichter Sulfitzellstoff
50 % gebleichter Sulfatzellstoff
25 % China Clay, bezogen auf trockenen Zellstoff
2 % Alaun, bezogen auf trockenes Papier.

Beide Prüfpapiere waren in der Masse ungeleimt, hatten ein Flächengewicht von 70 g/m$^2$. Der Mahlgrad betrug 25°SR (Schopper-Riegler), der Aschegehalt 14 %. Die Präparationslösungen enthielten, wenn nicht anders angegeben, jeweils 2,5 g/l des Copolymerisates, bezogen auf den Feststoffgehalt der Dispersionen und 60 g/l einer oxidativ abgebauten Stärke mit einem $\eta_i$ von 0,36 dl/g. Die Flottenaufnahme lag in allen Fällen bei 90 %, bezogen auf trockenes Papier.

Die mittlere Teilchengröße der Copolymerisatdispersion wurde nach praktisch vollständigem enzymatischen Abbau der Schutzkolloidhülle mit Hilfe eines Nanosizers der Firma Coulter Electronics gemessen. Hierbei wurden 10 ml der Dispersion mit 30 ml Wasser verdünnt. Dann versetzte man 1 ml der so erhaltenen wäßrigen Lösung mit 0,03 g Zitronensäure und 0,2 g des Natriumsalzes des Schwefelsäurehalbesters des Reaktionsprodukts von 1 Mol Isooctylphenol mit 25 Mol Ethylenoxid. Nach Einstellung des pH-Wertes auf 5,0 durch Zugabe von verdünnter Ammoniaklösung gab man 3 ml einer 1 %igen wäßrigen, handelsüblichen Enzymlösung (α-Amylase B) zu und erhitzte die Mischung 1 Stunde auf eine Temperatur von 55°C. Die Probe wurde anschließend mit Wasser auf eine Konzentration von ~ 0,001 Gew.% verdünnt. Danach bestimmte man den Teilchendurchmesser im Nanosizer.

Charkterisierung der eingesetzten Stärken und Enzyme

EP 0 257 412 B2

| | $\eta_i$ dl/g | Substitutionsgrad Mol/Mol Glucoseeinheiten | |
|---|---|---|---|
| **Stärke I:** oxidativ abgebaute Kartoffelstärke | 0,34 | 0,04 | -COOH |
| **Stärke II:** oxidativ abgebaute Kartoffelstärke | 0,28 | 0,034 | -COOH |
| **Stärke III:** abgebaute, kationische Kartoffelstärke | 0,47 | 0,015 0,027 | -COOH N |
| **Stärke IV:** abgebaute Hydroxyethyl- kartoffelstärke | 0,47 | 0,015 0,07 | -COOH Hydroxyethylgruppen |

α-Amylase A

α-Amylase A ist eine thermisch höher belastbare α-Amylase. Mit 16,7 mg 100 %iger α-Amylase A können in 7 bis 20 Minuten bei 37°C und einem pH-Wert von 5,6 und einem Calciumgehalt der Lösung von 0,0043 Mol/l 5,26 g Stärke "Amylum Solubile" der Firma Merck abgebaut werden. α-Amylase A hat bei 90°C, pH 6,5 ein Aktivitätsmaximum.

α-Amylase B

α-Amylsase B hat bei 55°C und einem pH-Wert von 5,0 ein Aktivitätsmaximum. Mit 1,25 mg 100 %iger α-Amylase B können in 7 bis 20 Minuten bei 37°C und einem pH-Wert von 4,75,26 g Stärke "Amylum Solubile" der Firma Merck abgebaut werden.

Verwendete Abkürzungen:
AN:Acrylnitril
BA:n-Butylacrylat
tBA: t-Butylacrylat
iBA:i-Butylacryalt
DMAEMA:Dimethylaminoethylmethacrylat
NFS:Natriumformaldehydsulfoxylat

Beispiel 1

In einem 1 l-Vierhalskolben, der mit Rührer, Rückflußkühler, Dosiervorrichtungen und Einrichtung zum Arbeiten unter Stickstoffatmosphäre ausgestattet ist, werden 31,8 g Stärke I und 219 g Wasser vorgelegt und unter Rühren 30 Minuten auf eine Temperatur von 85°C erwärmt. Dann fügt man 1 g einer 1 %igen wäßrigen Calciumacetatlösung und 1,6 g einer 1 %igen handelsüblichen Enzymlösung (α-Amylase A) zu. Nach 20 Minuten wird der enzymatische Stärkeabbau durch Zugabe von 4 g Eisessig abgestoppt. Die Intrinsic-Viskosität der Stärke beträgt nach dieser Behandlung 0,21 dl/g. Man fügt außerdem 7 g einer 1 %igen wäßrigen Eisen-II-sulfat-lösung und 0,34 g eines 30 %igen Wasserstoffperoxids zu. Die Temperatur der Reaktionsmischung wird auf 85°C gehalten. Bei dieser Temperatur gibt man dann innerhalb von 1 Stunde eine Mischung aus 40 g Acrylnitril und 33,5 g n-Butylacrylat und separat davon ebenfalls innerhalb einer Stunde 61 ml einer 0,7 %igen Wasserstoffperoxidlösung zu. Nachdem die gesamten Monomeren zudosiert sind, polymerisiert man noch eine Stunde bei einer Temperatur von 85°C nach. Man erhält eine Dispersion mit einem Feststoffgehalt von 26,3

6

%. Der LD-Wert der Dispersion beträgt 96 %.

Durch Verdünnen der Polymerlösung mit Wasser auf einen Copolymerisatgehalt von 2,5 g/l wird eine Präparationslösung hergestellt und die oben beschriebenen Prüfpapiere A und B geleimt. Das Prüfpapier A hat einen Cobb-Wert von 22, das Prüfpapier B einen Cobb-Wert von 34.

Beispiel 2

In einem 1 l-Vierhalskolben, der mit einem Rührer, Rückflußkühler, 2 Tropftrichtern und einer Vorrichtung für das Arbeiten unter Stickstoff versehen ist, werden 31,8 g Stärke I und 260 g Wasser vorgelegt und unter Rühren 30 Minuten auf eine Temperatur von 85°C erwärmt. Dann fügt man 1 g einer 1 %igen Calciumacetatlösung und 1,6 g einer 1 %igen handelsüblichen Enzymlösung (α-Amylase A) zu und erhitzt das Reaktionsgemisch 20 Minuten auf eine Temperatur von 85°C. Die Intrinsic-Viskosität der aufgeschlossenen Stärke beträgt dann 0,20 dl/g. Zu dieser aufgeschlossenen Stärke gibt man dann 7 g einer 1 %igen wäßrigen Eisen-II-sulfat-Lösung und 0,34 g 30 %iges Wasserstoffperoxid auf einmal zu und danach kontinuierlich innerhalb von 1,5 Stunden eine Monomerenmischung aus 33 g Acrylnitril, 18,3 g n-Butylacrylat, 18,3 g tert.-Butylacrylat und 3,5 g Styrol. Aus dem 2. Tropftrichter gibt man, und zwar gleichzeitig mit der Monomerlösung, kontinuierlich eine Mischung von 1,4 g 30 %igen Wasserstoffperoxid in 50 ml Wasser zu. Nach Abschluß der Monomer- und Initiatorzugabe wird die Reaktionsmischung noch 1 Stunde auf eine Temperatur von 85°C gehalten. Es resultiert eine feinteilige wäßrige Dispersion mit einem Feststoffgehalt von 22,6 %. Der LD-Wert beträgt 97 %, der Teilchendurchmesser der Dispersion nach enzymatischem Abbau 78 nm.

Aus der so erhaltenen wäßrigen Polymerdispersion wird eine Präparationslösung hergestellt, indem man einen Feststoffgehalt von 2,5 g/l durch Verdünnen mit Wasser einstellt. Diese Präparationslösung wird zur Leimung der oben angegebenen Prüfpapiere A und B verwendet. Das geleimte Prüfpapier A hat einen Cobb-Wert von 24,5, das geleimte Prüfpapier B einen Cobb-Wert von 19.

Beispiel 3

In der im Beispiel 2 beschriebenen Vorrichtung werden 41,7 g Stärke I und 228 g Wasser vorgelegt und unter Rühren 30 min. lang auf 85°C erhitzt. Dann gibt man 2,5 g einer 1 %igen handelsüblichen Enzymlösung (α-Amylase A) und 1 g einer 1 %igen wäßrigen Calciumacetatlösung zu. Der Stärkeabbau wird nach 20 Minuten durch Zusatz von 4 g Eisessig beendet. Die Intrinsic-Viskosität der eingesetzten oxidativ abgebauten Kartoffelstärke beträgt dann 0,22 dl/g. Man gibt 3 g einer 1 %igen Eisen-II-salzlösung und 0,34 g 30 %iges Wasserstoffperoxid auf einmal zu und beginnt dann bei einer Temperatur des Reaktionsgemisches von 85°C mit der kontinuierlichen Zugabe eines Monomerengemisches aus 28 g Acrylnitril, 20,2 g n-Butylacrylat und 19,2 g tert.-Butylacrylat sowie der kontinuierlichen Zugabe der Initiatorlösung aus 1,3 g 30 %igem Wasserstoffperoxid in 50 ml Wasser. Die gleichzeitige Monomeren- und Initiatorzugabe ist nach 1,5 Stunden beendet. Danach wird das Reaktionsgemisch noch 1 Stunde auf eine Temperatur von 85°C gehalten. Es resultiert eine wäßrige feinteilige Copolymerisatdispersion mit einem Feststoffgehalt von 28,7 %, die einen LD-Wert von 96 % hat. Der Teilchendurchmesser der Copolymerisatteilchen nach enzymatischem Abbau beträgt 63 nm.

Die Copolymerisatdispersion wird durch Zugabe von Wasser auf einen Feststoffgehalt von 2,5 g/l verdünnt und zum Leimen der Prüfpapiere A und B verwendet. Das geleimte Prüfpapier A hat einen Cobb-Wert von 22, das geleimte Prüfpapier B einen Cobb-Wert von 23.

Beispiel 4

In der im Beispiel 2 beschriebenen Apparatur werden 41,3 g Stärke I und 222 g Wasser vorgelegt und 60 min. bei 85°C gerührt. Man fügt dann 0,12 g Calciumacetat und 2,5 g einer 1 %igen handelsüblichen Enzymlösung (α-Amylase A) zu und rührt das Reaktionsgemisch 20 min. bei 85°C. Der enzymatische Abbau wird durch Zusatz von 5 g Eisessig beendet. Die Stärke hat nach dieser Behandlung eine Viskosität $\eta_i$ von 0,23 dl/g. Dann gibt man 3 g einer 1 %igen wäßrigen Eisen-II-sulfat-Lösung und 1,3 g 30 %iges Wasserstoffperoxid zu. Unmittelbar nach der Wasserstoffperoxidzugabe wird dann kontinuierlich innerhalb von 1,5 Stunden als Zulauf 1 eine Emulsion folgender Zusammensetzung zugegeben:

36 g Acrylnitril,

24 g n-Butylacrylat,

8 g Isobutylacrylat

1 g Natriumformaldehydsulfoxylat und

10 g Wasser.

Gleichzeitig mit Beginn des Zulaufs 1 wird ein Zulauf 2 zur Reaktionsmischung dosiert, der aus einer Lö-

7

sung von 1,3 g 30 %igen Wasserstoffperoxid in 50 g Wasser besteht. Die Zuläufe 1 und 2 werden innerhalb von 1,5 Stunden zum Reaktionsgemisch zudosiert. Die Polymerisation erfolgt bei 85°C. Nach Beendigung der Initiator- und Monomerenzugabe wird das Reaktionsgemisch noch 1 Stunde nachpolymerisiert. Man erhält eine Dispersion mit einem Feststoffgehalt von 25,6 % und einem LD-Wert von 95 %. Der Teilchendurchmesser des Polymeren beträgt nach dem enzymatischen Abbau 90 nm.

Durch Verdünnen mit Wasser wird eine 2,5 g/l Feststoffe enthaltende Präparationslösung hergestellt und als Leimungsmittel für die oben beschriebenen Prüfpapiere A und B verwendet. Das geleimte Prüfpapier A hat einen Cobb-Wert von 23, das geleimte Prüfpapier B einen Cobb-Wert von 22.

Beispiele 5 bis 18

Wie im Beispiel 4 beschrieben, wird gemäß den Angaben in Tabelle 1 die im Beispiel 4 angegebene Stärke I mit der ebenfalls im Beispiel 4 beschriebenen α-Amylase A enzymatisch unter den dort genannten Bedingungen aufgeschlossen. In der Tabelle 1 sind die Intrinsic-Viskositäten der jeweils hergestellten enzymatisch aufgeschlossenen Stärken angegeben sowie die Mengen an Eisen-II-sulfat-Lösung und Wasserstoffperoxid.

## Tabelle 1

### Vorlage: Mengen jeweils in g

| Beispiel | Wasser | Stärke I 82 %ig | Amylase 1 %ig | $\eta_i$ der enzymatisch aufgeschlossenen Stärke | Fe-Salz 1 %ig | $H_2O_2$ 30 %ig |
|---|---|---|---|---|---|---|
| 4 | 225 | 41,3 | 2,5 | 0,23 | 3 | 1,3 |
| 5 | 225 | 41,3 | 2,5 | 0,21 | 3 | 1,3 |
| 6 | 225 | 41,3 | 2,5 | 0,24 | 3 | 1,3 |
| 7 | 225 | 41,3 | 2,5 | 0,20 | 3 | 1,3 |
| 8 | 225 | 41,5 | 1,9 | 0,25 | 3 | 1,3 |
| 9 | 225 | 41,5 | 1,9 | 0,24 | 3 | 1,3 |
| 10 | 225 | 41,5 | 2,5 | 0,23 | 3 | 1,3 |
| 11 | 225 | 41,5 | 2,5 | 0,23 | 3 | 1,3 |
| 12 | 225 | 41,5 | 2,5 | 0,21 | 3 | 1,3 |
| 13 | 225 | 41,5 | 2,5 | 0,22 | 3 | 1,3 |
| 14 | 175 | 41,5 | 3 | 0,19 | 3 | 1,3 |
| 15 | 175 | 41,5 | 2,5 | 0,22 | 6 | 1,3 |
| 16 | 143 | 36,6[1] | | 0,20 | 4 | 0,5 |
| 17 | 225 | 41,3 | 2,5 | 0,23 | 3 | 1,3 |
| 18 | 225 | 41,3 | 2,5 | 0,21 | 3 | 1,3 |

[1] Stärke II wurde anstelle von Stärke I verwendet

Dann gibt man als Zulauf 1 eine Emulsion aus den in Tabelle 2 ersichtlichen Bestandteilen zu und gleichzeitig damit jeweils einen Zulauf 2, der aus einer Mischung von 1,3 g 30 %igem Wasserstoffperoxid in 50 g Wasser besteht. Die Dauer der Zuläufe 1 und 2 ist jeweils gleich und in Tabelle 2 angegeben. Man erhält in allen Fällen feinteilige wäßrige Dis- persionen, deren Feststoffgehalt, LD-Wert und Durchmesser der Polymerteilchen nach dem enzymatischen Abbau in Tabelle 2 angegeben ist. Außerdem sind in Tabelle 2 die Cobb- Werte für die mit einer 2,5 g/l Feststoffe enthaltenden wäßrigen Präparationslösung geleimten Prüfpapiere A und B angegeben.

**Tabelle 2**

Zulauf 1: Emulsion aus

| Bei-spiel Nr. | NFS | $H_2O$ | AN | BA | tBA | iBA | Zulauf-dauer h | FG % | LD-Wert % | Durch-messer nm | Leimung Cobb-Wert für Prüf-papier der Polymer-teilchen A | B |
|---|---|---|---|---|---|---|---|---|---|---|---|---|
| 4 | 1 | 10 | 36 | 24 | | 8 | 1,5 | 25,6 | 95 | 90 | 23 | 22 |
| 5 | 1 | 10 | 37 | 30 | | | 1,5 | 26,6 | 94 | 84 | 25 | 17 |
| 6 | 1 | 10 | 28 | 20 | 19 | | 1,5 | 25,9 | 96 | 100 | 22 | 20 |
| 7 | 1 | 10 | 34 | 6 | 27 | | 1,5 | 26,8 | 94 | 110 | 29 | 23 |
| 8 | 1 | 10 | 34 | 17 | | 16 | 1,5 | 28,4 | 96 | 96 | 19 | 22 |
| 9 | 1 | 10 | 36 | 24 | | 8 | 1,5 | 29,2 | 95 | 99 | 21 | 27 |
| 10 | 1 | 10 | 30 | 27 | | 10 | 1 | 24,6 | 97 | 87 | 21 | 27 |
| 11 | 1 | 10 | 30 | 27 | 10 | | 3 | 19,7 | 96 | 87 | 24 | 33 |
| 12 | 1 | 10 | 20 | 30 | 17 | | 3 | 22,0 | 97 | 96 | 22 | 53 |
| 13 | 1 | 10 | 30 | 27 | 10 | | 1,5 | 23 | 97 | 86 | 23 | 37 |
| 14 | 1 | 10 | 30 | 27 | 10 | | 1,5 | 22,3 | 94 | 103 | 21 | 27 |
| 15 | 1,5[1] | 10 | 30 | 27 | 10 | | 1,5 | 22,2 | 96 | 93 | 22 | 35 |
| 16 | 0,5[1] | 175 | 35 | 18 | 18 | | 2,3 | 20,0 | 95 | 81 | 25 | 20 |
| 17 | 1 | 10 | 33 | 13 | 20 | | 3 | 21,6 | 97 | 82 | 21 | 33 |
| 18 | 1 | 10 | 23 | 27 | 17 | | 3 | 24,0 | 96 | 89 | 25 | 52 |

[1] zusätzlich noch 0,1 g Emulgator Natriumalkylsulfonat

Beispiele 19 bis 23

In einem mit Rührer, Rückflußkühler und 2 Tropftrichtern versehenen 1 l-Kolben werden in einer Stickstoffatmosphäre 40,2 g Stärke I in 300 ml Wasser suspendiert und 20 min. auf 85°C erwärmt. Dann fügt man 2,3 g einer 1 %igen handelsüblichen Enzymlösung ($\alpha$-Amylase A) zu und baut die bereits aufgeschlossene Kartoffelstärke 20 min. lang bei 85°C soweit ab, bis sie die in Tabelle 3 jeweils angegebenen Intrinsic-Viskositäten aufweist. Das Enzym wird dann durch Zusatz von 4 ml Eisessig und 2,7 g 1 %iger wäßriger Eisen-II-sulfatlösung inaktiviert. Man gibt die in Tabelle 3 jeweils angegebene Menge an 30 %igem Wasserstoffperoxid und jeweils 36 % des ebenfalls in Tabelle 3 angegebenen Monomerzulaufs zu der Vorlage. Der Monomerenzulauf besteht aus einer Emulsion, die durch Emulgieren der in Tabelle 3 angegebenen Monomeren in jeweils 27 g Wasser unter Verwendung von 0,07 g eines handelsüblichen Emulgators auf Basis von Natrium-$C_{14}$-alkylsulfonat erhalten wird. Danach gibt man zur Vorlage die in Tabelle 3 angegebenen Mengen Natriumformaldehydsulfoxylat in jeweils 14 ml Wasser gelöst innerhalb von 10 min. zu. Der Rest der Monomerenemulsion wird dann innerhalb der in Tabelle 3 angegebenen Zulaufdauer jeweils gleichzeitig mit einem Initiatorzulauf aus 0,94 g 30 %igem Wasserstoffperoxid in 42 g Wasser zudosiert. Man erhält eine feinteilige Dispersion, deren Feststoffgehalt, LD-Wert und Teilchendurchmesser der Polymerteilchen (nach Entfernung der Stärkehülle) in Tabelle 3 angegeben ist.

Mit jeweils 2,5 g/l Feststoffe enthaltenden Dispersionen, die durch Verdünnen der Dispersionen gemäß den Beispielen 19 bis 24 erhalten wurden, sind die Prüfpapiere A und B geleimt worden. Die Leimungswerte für die Prüfpapiere A und B sind ebenfalls in Tabelle 3 angegeben.

EP 0 257 412 B2

## Tabelle 3

| Bei-spiel Nr. | Wasser | Stärke 82 %ig | Amy-lase 1 %ig | $\eta_i$ der Stärke nach enzym. Auf-schluß | Fe-salz 1 %ig | $H_2O_2$ 30 %ig | NFS | ... Teile Monomere emulgiert in 27 Teile $H_2O$ | | | Zulauf-dauer h | FG % | LD-Wert % | Durch-messer der Poly-merteil-chen nm | Leimung Cobb-Wert für Prüf-papier | |
|---|---|---|---|---|---|---|---|---|---|---|---|---|---|---|---|---|
| | | | | | | | | AN | BA | tBA | | | | | A | B |
| 19 | 300 | 40,2 | 2,3 | 0,21 | 2,7 | 2,0 | 0,72 | 30 | 27 | 10 | 1 | 19,6 | 95 | 106 | 24 | 21 |
| 20 | 299 | 48,8 | 2,9 | 0,20 | 2,7 | 2 | 0,72 | 30 | 27 | 10 | 0,5 | 19,7 | 97 | 88 | 22 | 23 |
| 21 | 307 | 36,6 | 2,3 | 0,23 | 2,7 | 1,4 | 0,5 | 32 | 28 | 11 | 1,3 | 19,6 | 95 | 99 | 22 | 27 |
| 22 | 307 | 48,8 | 2,9 | 0,23 | 2,7 | 1,4 | 0,5 | 27 | 24 | 9 | 1,3 | 20,3 | 96 | 95 | 22 | 31 |
| 23 | 308 | 40 | 2,3 | 0,19 | 2,7 | 1,3 | 0,5 | 37 | 30 | | 1,5 | 18,9 | 96 | 88 | 31 | 26 |

Beispiel 24

In der im Beispiel 2 beschriebenen Apparatur werden 73 g Stärke IV in 470 g bei 90°C aufgeschlossen. Nach dem Abkühlen auf 85°C werden 4 g einer 1 %igen $\alpha$-Amylase A zugegeben. Nach 20 Minuten wird das Enzym durch Zusatz von 10 g Eisessig und 6 g einer 1 %igen Eisensulfatlösung inaktiviert ($\eta_i$ = 0,16 dl/g). Dann wird direkt nach Zusatz von 1 g 30 %igem Wasserstoffperoxid innerhalb von 2 Stunden eine Mischung von 63 g Acrylnitril, 56 g n-Butylacrylat, 21 g t-Butylacrylat und gleichzeitig eine Lösung von 4 g Wasserstoffperoxid (30 %ig) in 97,5 g Wasser zudosiert. Nach einstündiger Nachpolymerisation resultiert eine Dispersion mit dem Feststoffgehalt 25,7 % und dem LD-Wert 90.

Beispiel 25

In der im Beispiel 2 beschriebenen Apparatur werden 73 g Stärke I in 470 g Wasser bei 90°C aufgeschlossen. Nach dem Abkühlen auf 85°C werden 4 g einer 1 %igen $\alpha$-Amylase A zugegeben. Nach 20 Minuten wird das Enzym durch Zusatz von 10 g Eisessig und 6 g einer 1 %igen Eisensulfatlösung inaktiviert ($\eta_i$ = 0,15 dl/g). Dann wird direkt nach Zusatz von 1 g 30 %igem Wasserstoffperoxid begonnen, innerhalb von 2 Stunden eine Mischung von 63 g Acrylnitril, 56 g n-Butylacrylat, 21 g t-Butylacrylat und 2,8 g Acrylsäure und gleichzeitig eine Lösung von 4 g Wasserstoffperoxid (30 %ig) in 97,5 g Wasser zuzudosieren. Nach einstündiger Nachpolymerisation resultiert eine Dispersion mit dem Feststoffgehalt 25,8 % und dem LD-Wert 93.

Beispiel 26

In der im Beispiel 2 beschriebenen Apparatur werden 61 g Stärke III in 470 g Wasser bei 90°C aufgeschlossen. Nach dem Abkühlen auf 85°C werden 4 g einer 1 %igen $\alpha$-Amylase A zugegeben. Nach 20 Minuten wird das Enzym durch Zusatz von 10 g Eisessig und 6 g einer 1 %igen Eisensulfatlösung inaktiviert ($\eta_i$ = 0,17 dl/g). Dann wird direkt nach Zusatz von 1 g 30 %igem Wasserstoffperoxid innerhalb von 3 Stunden eine Mischung von 67,5 g Acrylnitril, 60 g n-Butylacrylat, 22,5 g t-Butylacrylat und gleichzeitig eine Lösung von 4 g Wasserstoffperoxid (30 %ig) in 97,5 g Wasser zudosiert. Nach einstündiger Nachpolymerisation resultiert eine Dispersion mit dem Feststoffgehalt 24,0 % und dem LD-Wert 91.

Beispiel 27

In der im Beispiel 2 beschriebenen Apparatur werden 24 g Stärke III in 345 g Wasser bei 90°C aufgeschlossen. Nach dem Abkühlen auf 55°C werden 0,6 g einer 1 %igen $\alpha$-Amylase B zugegeben. Nach 30 Minuten wird das Enzym durch Zusatz von 10 g Eisessig und 6 g einer 1 %igen Eisensulfatlösung inaktiviert ($\eta_i$ = 0,35 dl/g). Dann wird direkt nach Zusatz von 2,5 g 30 %igem Wasserstoffperoxid begonnen, innerhalb von 3 Stunden eine Mischung von 45 g Acrylnitril, 40 g n-Butylacrylat, 15 g t-Butylacrylat, 2 g Natriumformaldehydsulfoxylat und 20 g Wasser sowie gleichzeitig eine Lösung von 2,5 g Wasserstoffperoxid (30 %ig) in 97,5 g Wasser zuzudosieren. Nach einstündiger Nachpolymerisation resultiert eine Dispersion mit dem Feststoffgehalt 19,8 % und dem LD-Wert 88.

Beispiel 28

In der im Beispiel 2 beschriebenen Apparatur werden 24 g Stärke III in 345 g Wasser bei 90°C aufgeschlossen. Nach dem Abkühlen auf 55°C werden 0,6 g einer 1 %igen $\alpha$-Amylase B zugegeben. Nach 30 Minuten wird das Enzym durch Zusatz von 10 g Eisessig und 6 g einer 1 %igen Eisensulfatlösung inaktiviert ($\eta_i$ = 0,34 dl/g). Dann wird direkt nach Zusatz von 2,5 g 30 %igem Wasserstoffperoxid begonnen, innerhalb von 3 Stunden eine Mischung von 45 g Acrylnitril, 40 g n-Butylacrylat, 15 g t-Butylacrylat, 2 g Natriumformaldehydsulfoxylat, 20 g Wasser, 5 g mit Dimethylsulfat quaterniertem Vinylimidazol und gleichzeitig eine Lösung von 2,5 g Wasserstoffperoxid (30 %ig) in 97,5 g Wasser zuzudosieren. Nach einstündiger Nachpolymerisation resultiert eine Dispersion mit dem Feststoffgehalt 20,0 % und dem LD-Wert 90.

Beispiel 29

In der im Beispiel 2 beschriebenen Apparatur werden 24 g Stärke III in 345 g Wasser bei 90°C aufgeschlossen. Nach dem Abkühlen auf 55°C werden 0,6 g einer 1 %igen $\alpha$-Amylase B zugegeben. Nach 30 Minuten wird das Enzym durch Zusatz von 10 g Eisessig und 6 g einer 1 %igen Eisensulfatlösung inaktiviert ($\eta_i$ = 0,36 dl/g). Dann wird direkt nach Zusatz von 2,5 g 30 %igem Wasserstoffperoxid begonnen, innerhalb von 3 Stunden eine Mischung von 45 g Acrylnitril, 40 g n-Butylacrylat, 15 g t-Butylacrylat, 2 g Natriumformaldehydsulfoxylat, 20 g Wasser, 2,5 g Diethylaminoethylacrylat und gleichzeitig eine Lösung von 2,5 g Wasserstoffperoxid (30 %ig) in 97,5 g Wasser zuzudosieren. Nach einstündiger Nachpolymerisation resultiert eine Dispersion mit dem Feststoffgehalt 19,0 % und dem LD-Wert 95.

Beispiel 30

In der im Beispiel 2 beschriebenen Apparatur werden 24 g Stärke III in 345 g Wasser bei 90°C aufgeschlossen. Nach dem Abkühlen auf 55°C werden 0,6 g einer 1 %igen $\alpha$-Amylase B zugegeben. Nach 30 Minuten wird das Enzym durch Zusatz von 10 g Eisessig und 6 g einer 1 %igen Eisensulfatlösung inaktiviert ($\eta_{li}$ = 0,35 dl/g). Dann wird direkt nach Zusatz von 2,5 g 30 %igem Wasserstoffperoxid begonnen, innerhalb von 3 Stunden eine Mischung von 45 g Acrylnitril, 40 g n-Butylacrylat, 15 g t-Butylacrylat, 2 g Natriumformaldehydsulfoxylat, 20 g Wasser, 2,5 g Dimethylaminoethylmethacrylat und gleichzeitig eine Lösung von 2,5 g Wasserstoffperoxid (30 %ig) in 97,5 g Wasser zuzudosieren. Nach einstündiger Nachpolymerisation resultiert eine Dispersion mit dem Feststoffgehalt 20,0 % und dem LD-Wert 87.

Beispiel 31

In der im Beispiel 2 beschriebenen Apparatur werden 24 g Stärke III in 345 g Wasser bei 90°C aufgeschlossen. Nach dem Abkühlen auf 55°C werden 0,6 g einer 1 %igen $\alpha$-Amylase B zugegeben. Nach 30 Minuten wird das Enzym durch Zusatz von 10 g Eisessig und 6 g einer 1 %igen Eisensulfatlösung inaktiviert ($\eta_{li}$ = 0,33 dl/g). Dann wird direkt nach Zusatz von 2,5 g 30 %igem Wasserstoffperoxid begonnen, innerhalb von 3 Stunden eine Mischung von 45 g Acrylnitril, 40 g n-Butylacrylat, 15 g t-Butylacrylat, 2 g Natriumformaldehydsulfoxylat, 20 g Wasser, 2,5 g Dimethylaminoethylmethacrylat und 1 g Acrylsäure und gleichzeitig eine Lösung von 2,5 g Wasserstoffperoxid (30 %ig) in 97,5 g Wasser zuzudosieren. Nach einstündiger Nachpolymerisation resultiert eine Dispersion mit dem Feststoffgehalt 20,3 % und dem LD-Wert 87.

Beispiel 32

In der im Beispiel 1 beschriebenen Apparatur werden 33 g Stärke III und 3 g Stärke V in 260 g Wasser bei 85°C aufgeschlossen. Dann werden 0,37 g Calciumacetat und 3,75 g 1 %ige $\alpha$-Amylase A zugesetzt. Nach 20 Minuten wird das Enzym durch Zugabe von 7,5 g Eisessig und 3,75 g 1 %ige Eisensulfatlösung inaktiviert. Die Stärkemischung hat dann einen $\eta_{li}$-Wert von 0,31 dl/g. Nach Zugabe von 1,0 g 30 %iges Wasserstoffperoxid werden 25 % der Monomermischung, die aus 31,6 g Acylnitril, 28,0 g n-Butylacrylat und 10,4 g t-Butylacrylat besteht, zugesetzt. Dann werden innerhalb von 10 Minuten eine Lösung von 0,5 g Natriumformaldehydsulfoxylat in 20 g Wasser zudosiert. Danach werden innerhalb von 2 Stunden der Rest der Monomeren und gleichzeitig eine Lösung von 0,24 g Wasserstoffperoxid in 30 g Wasser zugepumpt. Anschließend wird noch 1 Stunde nachpolymerisiert. Es wird eine Dispersion mit dem Feststoffgehalt 23,4 % und dem LD-Wert 93 % erhalten.

Tabelle 4

Oberfächenleimung mit den Leimungsmitteln, die nach den Beispielen 24 bis 32 hergestellt werden, anhand der Papiere A und B

| Beispiel | Prüfpapier A Cobb-Wert | Prüfpapier B Cobb-Wert |
|---|---|---|
| 24 | 23 | 37 |
| 25 | 20 | 75 |
| 26 | 19 | 23 |
| 27 | 22 | 24 |
| 28 | 21 | 22 |
| 29 | 18 | 23 |
| 30 | 21 | 23 |
| 31 | 18 | 23 |
| 32 | 20 | 25 |

Mit kationischer Stärke hergestellte Dispersionen sind als Masseleimungsmittel für Papier verwendbar. Das Leimungsmittel wird vor der Blattbildung zugegeben. Es wurden zwei verschiedene Papiersorten getestet. Die Ausgangsstoffe für die Herstellung der Papiere C und D hatten folgende Zusammensetzung:

Papier C:100 % Sulfitzellstoff, 30 % $CaCO_3$, 0,3 %, bezogen auf trockenes Papier, eines Copolymerisats aus Acrylamid und Acrylsäure; 12 % Asche (als $CaCO_3$).

Papier D:50 % Altpapier, 50 % Wellpappe; 80 g/m$^2$; kein zusätzliches Alaun.

## Tabelle 5

Verwendung der Dispersionen nach den Beispielen 26 bis 32 als Masseleimungsmittel für Papier

| Beispiel | Konz. % | Papier C Cobb-Wert | Papier D Cobb-Wert |
|---|---|---|---|
| 26 | 1 | 37 | 66 |
|  | 1,5 | 26 | 30 |
| 27 | 1 | 37 | 130 |
|  | 1,5 | 29 | 54 |
| 28 | 1 | 30 | 23 |
|  | 1,5 | 23 | 18 |
| 29 | 1 | 32 | 22 |
|  | 1,5 | 28 | 18 |
| 30 | 1 | 28 | 19 |
|  | 1,5 | 22 | 18 |
| 31 | 1 | 35 | 36 |
|  | 1,5 | 28 | 22 |
| 32 | 1 | 28 | 30 |
|  | 1,5 | 22 | 30 |

13

### Vergleichsbeispiel 1

Nach den Angaben in Beispiel 3 der US-PS 3 061 471 wurden 45,7 g Stärke I in 422 g Wasser bei 85°C aufgeschlossen. Nach Zusatz von 0,16 g Calciumacetat fügte man 2,3 g einer 1 %igen Enzymlösung ($\alpha$-Amylase A) zu. Nach 30 min. betrug $\eta_i$ = 0,28 dl/g. Danach gab man dann 1 g Eisessig und 0,05 g Eisen-II-ammoniumsulfatlösung zu und erniedrigte die Temperatur des Reaktionsgemisches auf 50°C. Es wurde dann mit 45,2 g Ethylacrylat, 0,2 g Ascorbinsäure und 0,67 g 30 %igem Wasserstoffperoxid versetzt. Die Temperatur des Reaktionsgemisches stieg schnell auf 75°C an und wurde 1,1 Stunden auf diesem Wert gehalten. Die resultierende Dispersion hatte bei einem Feststoffgehalt von 16,6 % einen LD-Wert von 99.

Die so hergestellt Dispersion wurde auf einen Feststoffgehalt von 2,5 g/l verdünnt und in dieser Form dann zum Leimen der oben beschriebenen Prüfpapiere A und B verwendet. Das Prüfpapier A hatte einen Cobb-Wert von 81, während das Prüfpapier B einen Cobb-Wert von 86 hatte.

### Vergleichsbeispiel 2

Entsprechend dem Beispiel 7 der US-PS 3 061 472 wurden 67,5 g Stärke II in 270 ml Wasser aufgeschlossen und die wäßrige Lösung mit 487 g Wasser verdünnt und auf eine Temperatur von 50°C gebracht ($\eta_i$ = 0,28 dl/g). Man gab 1 ml Eisessig, 0,3 g Eisen-II-ammoniumsulfat, 6,6 g eines handelsüblichen Emulgators (Alkylphenoxyether von Polyoxyethylen mit 10 Oxyethylengruppen im Mittel), 67,5 g tert.-Butylacrylat und 1,5 g 30 %iges Wasserstoffperoxid zu. Man polymerisierte bei einer Temperatur von 60°C. Nach 2 Stunden wurde das Reaktionsgemisch abgekühlt. Man erhielt eine Dispersion mit einem Feststoffgehalt von 15,1 %, die einen LD-Wert von 85 % hatte. Der Teilchendurchmesser der Polymerteilchen betrug 177 nm. Die oben angegebenen Prüfpapiere A und B wurden jeweils mit einer 2,5 g/l Feststoffe enthaltenden Dispersion geleimt. Der Cobb-Wert für das Prüfpapier A betrug 76, für das Prüfpapier B 89.

### Vergleichsbeispiel 3

Entsprechend dem Beispiel 3 der DE-OS 3 116 797 wurden in einem Polymerisationsgefäß 182 g einer 82 %igen Stärke IV in 260 g Wasser suspendiert und durch Erhitzen auf 85°C aufgeschlossen. Die Stärkelösung wurde dann mit 0,1 g eines handelsüblichen Enzyms ($\alpha$-Amylase Termamyl 60 L) bis zu einem $\eta_i$-Wert von 0,24 dl/g abgebaut. Dann fügte man 5 g Eisessig und anschließend 5 g 30 %iges Wasserstoffperoxid zu. Man gab 20 g einer Monomermischung aus 54 g Styrol und 6 g Acrylnitril zu und wartete zunächst, bis die Polymerisation ansprang und fügte dann erst den Rest der Monomermischung zu. Die Polymerisation wurde bei 90°C durchgeführt. Sie war nach 2,5 Stunden beendet. Die Dispersion hatte einen Feststoffgehalt von 41,6 %, einen LD-Wert von 57.

Die Dispersion wurde auf einen Feststoffgehalt von 2,5 g/l verdünnt und zum Leimen der Prüfpapiere A und B verwendet. Bei beiden Papieren betrug der Cobb-Wert nach der Leimung mehr als 150.

### Vergleichsbeispiel 4

Analog dem Beispiel 6 der EP-Anmeldung 134 449 wurden 8 g Dextrin in 55 g Wasser bei 70°C gelöst. Durch Zugabe von Eisessig wurde ein pH-Wert von 2,8 eingestellt und 1,1 g 80 %iges tert.-Butylhydroperoxid zugegeben. Man dosierte dann eine Mischung von 40 g Styrol und 60 g n-Butylacrylat und gleichzeitig eine Lösung von 0,6 g Natriumformaldehydsulfoxylat und 0,6 g Natriumsulfit in 50 g Wasser innerhalb von 2 Stunden zu. Nach beendeter Zugabe wurde das Reaktionsgemisch noch 1 Stunde bei einer Temperatur von 70°C nachpolymerisiert. Man erhielt eine Dispersion mit einem Feststoff gehalt von 51,6 % und einem LD-Wert von 56 %. Der mittlere Teilchendurchmesser der dispergierten Polymerteilchen betrug 179 nm.

Die so erhaltene Polymerdispersion wurde auf einen Feststoffgehalt von 2,5 g/l verdünnt und zum Leimen der Prüfpapiere A und B verwendet. Bei der Prüfung des Cobb-Wertes der geleimten Prüfpapiere fand man für das Prüfpapier A einen Cobb-Wert von 80 und für das Prüfpapier B einen Wert von 85.

### Vergleichsbeispiel 5

Gemäß Beispiel 1 der JP-OS 58/115 196 wird in einem mit einem Rührer und einem Rückflußkühler versehenen 2 l-Kolben 18,5 g Stärke II in 400 ml Wasser suspendiert und 40 min. auf 90°C erwärmt. Nach dem Abkühlen der aufgeschlossenen Stärke auf 30°C gab man eine Mischung aus 58 g Styrol und 43,5 g n-Butylacrylat und als Initiator eine Lösung aus 1 g Kaliumperoxiddisulfat in 50 ml Wasser zu. Das Reaktionsgemisch wurde unter Rühren auf 80°C erhitzt und 3 Stunden bei dieser Temperatur gehalten. Danach wurde es noch weitere 3 Stunden bei 90°C auspolymerisiert und anschließend abgekühlt. Man erhielt eine Dispersion mit einem Feststoffgehalt von 20,6 % und einem LD-Wert von 84. Der Teilchendurchmesser der Polymerteilchen betrug 101 nm.

Die so erhaltene Dispersion wurde auf einen Feststoffgehalt von 2,5 g/l verdünnt und als Leimungsmittel für die oben angegebenen Prüfpapiere A und B verwendet. Der Cobb-Wert des geleimten Prüfpapiers A betrug 58, der des geleimten Prüfpapiers B 29.

Vergleichsbeispiel 6

Wie im Vergleichsbeispiel 5 angegeben, wurden 18,5 g Stärke II in 400 ml Wasser suspendiert und bei 90°C aufgeschlossen. Die Mischung wurde dann auf 85°C abgekühlt, mit 0,5 g 10 %iger Calciumacetatlösung und 1 g einer 1 %igen $\alpha$-Amylase A versetzt. Nach einem 20 minütigem enzymatischen Abbau bei 85°C wurde das Enzym durch Zusatz von 4 ml Eisessig inaktiviert. Die Stärke hat dann einen $\eta_i$-Wert von 0,21 dl/g. Das Reaktionsgemisch wurde dann auf 30°C abgekühlt und mit einer Mischung von 46 g Acrylnitril, 40,5 g n-Butylacrylat und 15 g tert.-Butylacrylat vesetzt und außerdem eine Initiatorlösung aus 1 g Kaliumperoxiddisulfat in 50 ml Wasser zugegeben. Die Mischung wurde gerührt, auf 80°C erhitzt und 3 Stunden bei dieser Temperatur gehalten. Die Nachpolymerisation erfolgte innerhalb von 3 Stunden bei 90°C. Die Mischung wurde dann abgekühlt. Man erhielt eine Dispersion mit einem Feststoffehalt von 20,4 % und einem LD-Wert von 44. Der Teilchendurchmesser der dispergierten Polymerteilchen betrug 278 nm.

Die so erhaltene Polymerdispersion wurde auf einen Feststoffgehalt von 2,5 g/l verdünnt und zur Leimung der oben angegebenen Prüfpapiere A und B verwendet. Das Prüfpapier A hatte danach einen Cobb-Wert von 95, das Prüfpapier B einen Cobb-Wert von 90.

**Patentansprüche**

1. Leimungsmittel für Papier auf Basis feinteiliger, wäßriger Dispersionen von Copolymerisaten, die durch Copolymerisieren von ethylenisch ungesättigten Monomeren nach Art einer Emulsionspolymerisation in Gegenwart von Stärke erhältlich sind, dadurch gekennzeichnet, daß man 10 bis 56 Gewichtsteile einer Monomermischung aus
    (a) 20 bis 65 Gew.% Acrylnitril und/oder Methacrylnitril,
    (b) 80 bis 35 Gew.% eines Acrylsäureesters eines einwertigen, gesättigten C$_3$- bis C$_8$-Alkohols und
    (c) 0 bis 10 Gew.% anderen ethylenisch ungesättigten copolymerisierbaren Monomeren,
        wobei die Summe der Gewichtsprozente (a), (b) und (c) immer 100 beträgt, in 100 Gewichtsteilen einer wäßrigen Lösung, die 1,5 bis 25 Gew.% einer abgebauten Stärke mit einer Viskosität $\eta_i$ = 0,12 bis 0,50 dl/g gelöst enthält, bei Temperaturen von 40 bis 100°C in Gegenwart von Wasserstoffperoxid, Kombinationen von Wasserstoffperoxid mit einem Schwermetallsalz, Redoxsystemen aus Wasserstoffperoxid mit einem Reduktionsmittel oder Redoxsystemen aus Wasserstoffperoxid, einem Reduktionsmittel und zusätzlich einer geringen Menge eines Schwermetallsalzes als Initiator copolymerisiert.

2. Leimungsmittel nach Anspruch 1, dadurch gekennzeichnet, daß man eine Monomerenmischung aus
    (a) Acrylnitril und
    (b) mindestens einem Butylacrylat copolymerisiert.

3. Leimungsmittel nach den Ansprüchen 1 und 2, dadurch gekennzeichnet, daß man eine Monomerenmischung copolymerisiert, die als Monomer (c) eine ethylenisch ungesättigte C$_3$- bis C$_5$-Carbonsäure, Vinylsulfonat und/oder 2-Acrylamidopropansulfonsäure enthält.

4. Leimungsmittel nach den Ansprüchen 1 und 2, dadurch gekennzeichnet, daß man eine Monomerenmischung copolymerisiert, die als Monomer (c) Di-C$_1$-bis C$_3$-Alkylamino-C$_2$-bis C$_6$-alkyl(meth)acrylat, N-Vinylimidazolin und/oder N-Vinyl-2-methylimidazolin oder deren Quaternisierungsprodukte enthält.

5. Leimungsmittel nach den Ansprüchen 1 und 2, dadurch gekennzeichnet, daß man eine Monomerenmischung copolymerisiert, die als Monomer (c) Styrol, Acrylamid, Methacrylamid, Methacrylsäureester und/oder Acrylsäureester, die von den Acrylestern (b) verschieden sind, enthält.

6. Verwendung von Copolymerisaten, die durch Copolymerisieren von 10 bis 56 Gewichtsteilen einer Monomermischung aus

(a) 20 bis 65 Gew.% Acrylnitril und/oder Methacrylnitril,

(b) 35 bis 80 Gew.% eines Acrylesters eines einwertigen, gesättigten $C_3$- bis $C_8$-Alkohols und

(c) 0 bis 10 Gew.% anderen ethylenisch ungesättigten copolymerisierbaren Monomeren,

wobei die Summe der Gewichtsprozente (a), (b) und (c) immer 100 beträgt, in 100 Gewichtsteilen einer wäßrigen Lösung, die 1,7 bis 21 Gew.% einer abgebauten Stärke mit einer Viskosität $\eta_i$ = 0,12 bis 0,50 dl/g gelöst enthält, bei Temperaturen von 40 bis 100°C in Gegenwart von Wasserstoffperoxid, Kombinationen von Wasserstoffperoxid mit einem Schwermetallsalz, Redoxsystemen aus Wasserstoffperoxid mit einem Reduktionsmittel oder Redoxsystemen aus Wasserstoffperoxid, einem Reduktionsmittel und zusätzlich einer geringen Menge eines Schwermetallsalzes als Initiator erhältlich sind, als Leimungsmittel für Papier.

## Claims

1.  A paper size based on a finely divided, agueous dispersion of a copolymer which is obtainable by copolymerizing ethylenically unsaturated monomers by emulsion polymerization in the presence of starch, wherein from 10 to 56 parts by weight of a monomer mixture of

    (a) from 20 to 65% by weight of acrylonitrile and/or methacrylonitrile,

    (b) from 80 to 35% by weight of an acrylate of a monohydric, saturated $C_3$-$C_8$-alcohol and

    (c) from 0 to 10% by weight of other ethylenically unsaturated copolymerizable monomers,

    the sum of the percentages of (a), (b) and (c) always being 100,

    are copolymerized in 100 parts by weight of an agueous solution of from 1.5 to 25% by weight of a degraded starch having a viscosity $\eta_i$ of from 0.12 to 0.50 dl/g, at from 40 to 100°C in the presence of hydrogen peroxide, combinations of hydrogen peroxide with a heavy metal salt, redox systems of hydrogen peroxide with a reducing agent or redox systems of hydrogen peroxide, a reducing agent and addditionally a small amount of a heavy metal salt as initiator.

2.  A size as claimed in claim 1, wherein a monomer mixture of

    (a) acrylonitrile and

    (b) one or more butyl acrylates is copolymerized.

3.  A size as claimed in claim 1 or 2, wherein a monomer mixture which contains an ethylenically unsaturated $C_3$-$C_5$-carboxylic acid, vinyl sulfonate and/or 2-acrylamido-propanesulfonic acid as monomer (c) is copolymerized.

4.  A size as claimed in claim 1 or 2, wherein a monomer mixture which contains di-$C_1$-$C_3$-alkylamino-$C_2$-$C_6$-alkyl (meth)acrylate, N-vinylimidazoline and/or N-vinyl-2-methylimidazoline or their guaternization products as monomer (c) is copolymerized.

5.  A size as claimed in claim 1 or 2, wherein a monomer mixture which contains, as monomer (c), styrene, acrylamide, methacrylamide, a methacrylate and/or an acrylate which differs from the acrylates (b) is copolymerized.

6.  Use of a copolymer obtainable by copolymerization of from 10 to 56 parts by weight of a monomer mixture of

    (a) from 20 to 65% by weight of acrylonitrile and/or methacrylonitrile,

    (b) from 35 to 80% by weight of an acrylate of a monohydric, saturated $C_3$-$C_8$-alcohol and

    (c) from 0 to 10% by weight of other ethylenically unsaturated copolymerizable monomers,

    the sum of the percentages (a), (b) and (c) always being 100,

    in 100 parts by weight of an agueous solution of from 1.7 to 21% by weight of a degraded starch having a viscosity $\eta_i$ of from 0.12 to 0.50 dl/g, at from 40 to 100°C in the presence of a hydrogen peroxide, combinations of hydrogen peroxide with a heavy metal salt, redox systems of hydrogen peroxide with a reducing agent or redox systems of hydrogen peroxide, a reducing agent and addditionally a small amount of a heavy metal salt as initiator, as a size for paper.

**Revendications**

1. Agent d'encollage du papier à base de dispersions aqueuses finement divisées de copolymères que l'on peut obtenir par la copolymérisation de monomères à insaturation éthylénique, selon une polymérisation en émulsion, en présence d'amidon, caractérisé en ce qu'on copolymérise de 10 à 56 parties en poids d'un mélange de monomères constitué de
   (a) 20 à 65% en poids d'acrylonitrile et/ou de méthacrylonitrile,
   (b) 80 à 35% en poids d'un ester de l'acide acrylique d'un alcool monovalent saturé en $C_3$-$C_8$ et
   (c) 0 à 10% en poids d'autres monomères copolymérisables à insaturation éthylénique,
   où la somme des pourcentages pondéraux (a), (b) et (c) est toujours égale à 100,
   dans 100 parties en poids d'une solution aqueuse contenant en solution de 1,5 à 25% en poids d'un amidon dégradé, d'une viscosité $\eta_i$ de 0,12 à 0,50 dl/g, à des températures de 40 à 100°C et en présence de peroxyde d'hydrogène, de combinaisons du peroxyde d'hydrogène et d'un sel de métal lourd, de système redox constitués de peroxyde d'hydrogène et d'un agent réducteur, ou de système redox constitués de peroxyde d'hydrogène, d'un agent réducteur et complémentairement d'une faible proportion d'un sel de métal lourd, à titre d'amorceur.

2. Agent d'encollage selon la revendication 1, caractérisé en ce qu'on copolymérise un mélange de monomères constitué
   (a) d'acrylonitrile et
   (b) d'au moins un acrylate de butyle.

3. Agent d'encollage selon les revendications 1 et 2, caractérisé en ce qu'on copolymérise un mélange de monomères contenant, à titre de monomère (c), un acide carboxylique à insaturation éthylénique en $C_3$-$C_5$, du sulfate de vinyle et/ou de l'acide 2-acrylamidopropanesulfonique.

4. Agent d'encollage selon les revendications 1 et 2, caractérisé en ce qu'on copolymérise un mélange de monomères contenant, à titre de monomère (c), de l'acrylate ou du méthacrylate de dialkylamino($C_1$-$C_3$)alkyle($C_2$-$C_6$), de la N-vinylimidazoline et/ou de la N-vinyl-2-méthylimidazoline ou leurs produits de quaternisation.

5. Agent d'encollage selon les revendications 1 et 2, caractérisé en ce qu'on copolymérise un mélange de monomères contenant, à titre de monomère (c), du styrène, de l'acrylamide, du méthacrylamide, des méthacrylates et/ou des acrylates qui diffèrent des esters acryliques.

6. Utilisation comme agent d'encollage pour le papier, de copolymères que l'on peut obtenir par la copolymérisation de 10 à 56 parties en poids d'un mélange de monomères constitué de
   (a) 20 à 65% en poids d'acrylonitrile et/ou de méthacrylonitrile,
   (b) 80 à 35% en poids d'un ester de l'acide acrylique d'un alcool monovalent saturé en $C_3$-$C_8$ et
   (c) 0 à 10% en poids d'autres monomères copolymérisables à insaturation éthylénique,
   où la somme des pourcentages pondéraux (a), (b) et (c) est toujours égale à 100,
   dans 100 parties en poids d'une solution aqueuse contenant en solution de 1,7 à 21% en poids d'un amidon dégradé, d'une viscosité $\eta_i$ de 0,12 à 0,50 dl/g, à des températures de 40 à 100°C et en présence de peroxyde d'hydrogène, de combinaisons du peroxyde d'hydrogène et d'un sel de métal lourd, de système redox constitués de peroxyde d'hydrogène et d'un agent réducteur, ou de système redox constitués de peroxyde d'hydrogène, d'un agent réducteur et complémentairement d'une faible proportion d'un sel de métal lourd, à titre d'amorceur.